# EUROPEAN PATENT APPLICATION

(11) **EP 1 669 835 A2**
(43) Date of publication of application: **14.06.2006**
(21) Application number: 05025929.0
(22) Date of filing: 28.11.2005
(51) Int. Cl.: G06F 1/00

(54) **Digital image data authenticity assuring method and digital image data disclosure system**

(30) Priority: 29.11.2004 JP 2004343295; 24.11.2005 JP 2005338660
(71) Applicant: HITACHI, LTD., Chiyoda-ku Tokyo 100-8280 (JP)
(72) Inventor: Hatano, Yasuo Hitachi, Ltd. Intel. Prop. Office, 1-chome Chiyoda-ku Tokyo 100-8220 (JP); Miyazaki, Kunihiko Hitachi Ltd Intel. Prop. Office, 1-chome Chiyoda-ku Tokyo 100-8220 (JP); Toyoshima, Hisashi Hitachi Ltd Intel. Prop. Office, 1-chome Chiyoda-ku Tokyo 100-8220 (JP)
(74) Representative: Strehl Schübel-Hopf & Partner

(57) **Abstract**

An original signature can be verified even if a signed image data is properly altered in its portion.

The digital image data is divided into a plurality of configurational elements, and each of the feature values of the elements are calculated, so that the signature is created by combining the feature values. In case the configurational elements are to be deleted, they are substituted by substitutive data, and only the feature values are stored. The verification is created by using the stored feature values as the substituted elements and by using the calculated feature values as the remaining elements, so that the signature is verified with the signature attached to the digital image data.

## Description

### BACKGROUND

The present invention relates to a technique for assuring the authenticity of digital data.

As a technique for assuring the authenticity of digital documents, there is known a digital signature (e.g., "Applied Cryptography: Protocols, Algorithms, and Source Code in C, Second Edition" written by Bruce Schneier, John Wiley & Sons, (October 18, 1995) Section 20.1 Public Key Digital Signature Algorithms (pp 483 - 502) (hereinafter, referred to as Non-Patent Document 1).

In digital signatures of prior art, the alteration of a signed document can be detected even if a 1 bit in the signed document is altered. This technique is effective for detecting an alteration for a signed document but has been pointed out to have a trouble in a sanitization for protecting personal information. As a solution to this problem, there have been some methods, "Digitally Signed Document Sanitizing Scheme"(e.g., "Digital Document Sanitizing Scheme with Disclosure Condition Control" written by Kunihiko Miyazaki, Mitsuru Iwamura, Tsutomu Matsumoto, Ryoichi Sasaki, Hiroshi Yoshiura, Satoru Tezuka and Hideki Imai, Preliminary Document of Cryptography and Information Security Symposium of 2004, p. 515 - 520, January 27, 2004 (hereinafter, referred to as Non-Patent Document 2)), and "Content Extraction Signature"(ref. "Content Extraction Signatures" written by Ron Steinfeld, Laurence Bull, Yuliang Zheng, International Conference on Information Security and Cryptography ICISC 2001, volume 2288 of LNCS, pages 285 - 304, Berlin, 2001, Springer-Verlag (hereinafter, referred to as Non-Patent Document 3)).

As a method for sanitizing a digital document, there is known an information hiding apparatus for a PDF file (as referred to as JP-A-2002-207725 (hereinafter, referred to as Patent Document 2)). In Patent Document 2, the PDF file is once transformed into an image data having Tiff file format, then the image data is sanitized replaced a black image data as the region to be sanitized in it, and then the sanitized image data is transformed again into the PDF file. For the PDF file, for example, it seems that, overlaid with a black rectangular, a portion in a PDF file could be sanitized. In this case, however, the information in the portion to be sanitized is not deleted from the inside of the PDF file. On the other hand, according to Patent Document 2, the information of the sanitized portion can be completely deleted from the PDF file.

With the development of information technology, digital image data are being used widely. As a method for preventing the abuse of the digital image data, there is a method, called "digital watermark" which is a technique for embedding information, e.g., copyrights, in the image data Also, there is a digital watermark that enables us to detect the location of an alteration of the digital image data (as referred to JP-A-2004-48285 (hereinafter, referred to as Patent Document 1)).

### SUMMARY OF THE INVENTION

By using digital signature technique, an alteration of a signed document can be found even if the alteration is only 1 bit. This is a useful property from the viewpoint of assurance of authenticity of digital documents. However, when an administrative organ publishes a document according to the freedom of information system, the document is not made public from the viewpoint of privacy protection before personal information or the like is deleted. In this case, the digital signature technique of the prior art cannot assure the authenticity of a published document which is signed when it is generated. This is because digital signature technique of the prior art cannot discriminate between the deletion of personal information from a signed document for protecting the privacy and the unauthorized alteration into a signed document. As a method for solving this problem, there has been known digitally signed document sanitizing scheme.

With the development of information technology, digital image data is used widely. Authenticity is important in not a few of digital image data such as an evidence photograph. Digitally signed document sanitizing scheme can assure the authenticity of a signed document, which publishes after its portion is deleted (sanitized). In the file format such as the JPEG which has been widely used as the data format of the digital image data, however, digitally signed document sanitizing scheme unlike digital signature of the prior art cannot be applied as it is, because an irreversible transformation is included in the process of transformation from an original image to the JPEG format. Moreover, if digitally signed document sanitizing scheme is applied to a digital image data, it is necessary to substitute sanitized region in digital image as another digital image data such as a mosaic or a black one. However, these points are not considered in digitally signed document sanitizing scheme of the prior art.

As another method for sanitizing the image data file partially, there is known an information hiding apparatus for the PDF file (hereinafter, referred to as Patent Document 2). In Patent Document 2, sanitization is realized by transforming a target PDF file into the Tiff file, by replacing a black image as region to be sanitized in the transformed Tiff file, and by transforming the sanitized Tiff file again into the PDF file. For PDF file, it seems that the sanitization can be performed by covering sanitized portion with a black rectangular image data, for example. In this case, however, the information of the sanitized portion is left in the PDF file. According to Patent Document 2, the information of the sanitized portion can be completely deleted. However, Patent Document 2 does not consider the assurance of the authenticity of an original PDF file to be sanitized. Once transformed into the Tiff file, the original PDF file has a different structure from that of sanitized PDF file and therefore digitally signed document sanitizing scheme cannot be applied to Patent Document 2.

For digital image data, there is a digital watermark which is a technique for embedding information, e.g., copyrights, in the image data in order to prevent its abuse or protect the copy rights. In digital watermark, there is a method for detecting an alteration (or the position of alteration) of the digital image data. It is also possible to apply digital signature to digital image data directly in order to assure the authenticity of digital image data. In digital watermark of the prior art, however, the extraction procedure of the embedded information has to be kept secret and therefore the verification of the digital image data by an arbitrary third party is hard. In digital watermark, moreover, although embedded information could be detected even if the image data is sanitized, there is no consideration for verifying digital image data, in which the personal information is deleted. It is, therefore, impossible to discriminate whether deleting a part of an image data is an authentic sanitization or not. Also, in the case of applying digital signature to digital image data, the signed image data cannot be verified with the digital signature if the signed image data has been partially deleted when the image data is made public.

The present invention provides a digital image data with a technique to assure the authenticity that permits a proper change, e.g., sanitization, in a digital image data and a disclosure system for digital image data using the technique.

The invention is characterized by making it possible to apply digitally signed document sanitizing scheme to digital image data, to divide digital image data into a plurality of blocks, and to decide whether or not each block is to be disclosed. It is also possible to substitute another image data for foregoing non-disclosed (sanitized) blocks.

In the foregoing mode, moreover, a substitutive image data to be used for non-disclosed blocks can be made an object for assurance of the authenticity; by making it the object of the signature either for a digital image data by a signer or for the sanitized and signed image data by a sanitizer when he/she sanitized a signed image data.

The invention enable to assure the authenticity of a digital image data which is changed properly after signing it by transforming the image data into the intermediate data suitably and by applying digitally signed document sanitizing scheme, if the digital image is generated by a transformation including an irreversible transform

In the foregoing mode, moreover, when the transformation of digital image data includes a reversible one whose process is based on pixel or block composed of a plurality of pixels and when the resulting data is influenced by another pixel/block, the digitally signed document sanitizing scheme can be applied to the intermediate data which is get by applying its inverse transform to the digital image data.

By applying the invention, the digital image data can be verified even if it is partially sanitized. Thus, it is possible to provide an information disclosure system which assures authenticity of a signed document after the personal information would be deleted from the signed document (or the digital image data) scanned from a paper document.

These and other benefits are described throughout the present specification. A further understanding of the nature and advantages of the invention may be realized by reference to the remaining portions of the specification and the attached drawings.

### BRIEF DESCRIPTION OF THE DRAWINGS

Fig. 1 is a schematic diagram of a configuration of a network system for realizing an embodiment of the invention.
Fig. 2 is a schematic diagram of a configuration of a computer for realizing a signer's apparatus 102 in the embodiment of the invention.
Fig. 3 is a diagram for explaining a flow from the creation/reading to the storage of original image data 107 in the embodiment of the invention.
Fig. 4 is a diagram for explaining a flow from the creation of disclosed image data from original image data to the storage of the same in the embodiment of the invention.
Fig. 5 is a diagram for explaining a flow in the embodiment of the invention till the disclosed image data in a disclosed image data storage apparatus is verified by a verifier.
Fig. 6A and Fig. 6B are diagrams schematically showing a transformation from digitally signed image data to a JPEG file and an inverse transform of the same.
Fig. 7 is a diagram schematically showing the file construction of the JPEG file.
Fig. 8 is a diagram showing a processing flow for creating signed original image data from original image data in the embodiment of the invention.
Fig. 9 is a diagram showing a processing flow for creating disclosed image data from signed original image data in the embodiment of the invention.
Fig. 10 is a diagram showing a processing flow for verifying the disclosed image data with a verifier's apparatus in the embodiment of the invention.
Fig. 11 is a diagram schematically showing a processing and a data structure till the signed original image data is created from the original image data in case an SUMI-4 is applied to the embodiment of the invention.
Fig. 12 is a diagram schematically showing a processing and a data structure till disclosed image data is created from the signed original image data in case the SUMI-4 is applied to the embodiment of the invention.
Fig. 13 is a diagram schematically showing a processing and a data structure till the disclosed image data is verified in the verifier's apparatus in case the SUMI-4 is applied to the embodiment of the invention.
Fig. 14 is a diagram schematically showing a method for configuring a format of a sanitizable signature of the embodiment of the invention.
Fig. 15 is a diagram showing one example of an expressing method of the auxiliary data of the sanitizable signature in case an XML of the embodiment of the invention is used.
Fig. 16 is a diagram schematically showing a creation/verification of the sanitizable signature by using the XML signature of the embodiment of the invention.

### DESCRIPTION OF THE PREFERRED EMBODIMENTS

Embodiments of the invention are described in the following.

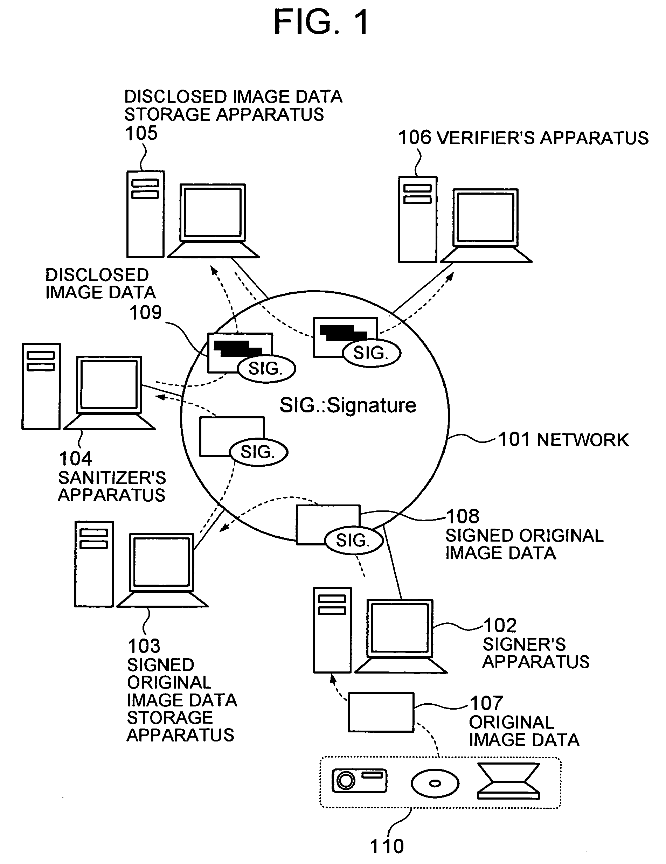

Fig. 1 is a schematic diagram of a configuration of an information disclosure system, in which the invention is applied to the system. As shown, the present system includes: a signer's apparatus 102 for signing an original image data 107; a signed original image data storage apparatus 103 for storing an original image data with signature (as will be called the "signed original image data" 108); a sanitizer's apparatus 104 for sanitizing the portion to be hidden, at the time of disclosing the signed original image data 108; a disclosed image data storage apparatus 105 for storing the disclosed image data that is signed and sanitized (as will be called the "disclosed image data" 109); and a verifier's apparatus 106 for requesting a disclosed image data storage apparatus 105 to browse the disclosed image data 109 and to verify it.

In Fig. 1, the signer's apparatus 102, all the signed original image data storage apparatus 103, the sanitizer's apparatus 104, the disclosed image data storage apparatus 105 and the verifier's apparatus 106 are connected with the common network 101, but the connection may take another mode. For example, the signer's apparatus 102, the signed original image data storage apparatus 103 and the sanitizer's apparatus 104 are connected with an LAN (Local Area Network), and the disclosed image data storage apparatus 105 is connected with an external network through a gateway server so that the verifier's apparatus 106 on the external network requests the disclosed image data storage apparatus 105 to browse the disclosed image data 109. In the case of this configuration, the image data other than the disclosed image data 109 can be prevented from leaking to the outside by making a proper access control or the like.

In Fig. 1, moreover, all the signer's apparatus 102, the signed original image data storage apparatus 103, the sanitizer's apparatus 104, the disclosed image data storage apparatus 105 and the verifier's apparatus 106 are expressed as different apparatus but need not be different apparatus. For example, if the sanitizer's apparatus 104 creates the disclosed image data 109 suitably in response to a request from the verifier's apparatus 106, the disclosed image data storage apparatus 105 may be implemented in the same apparatus as the sanitizer's apparatus 104 or the verifier's apparatus 106. In Fig. 1, moreover, the original image data 107 is fetched in the signer's apparatus 102 by using an external medium 110, but the signed original image data 108 may be created for the image created in the signer's apparatus 102.

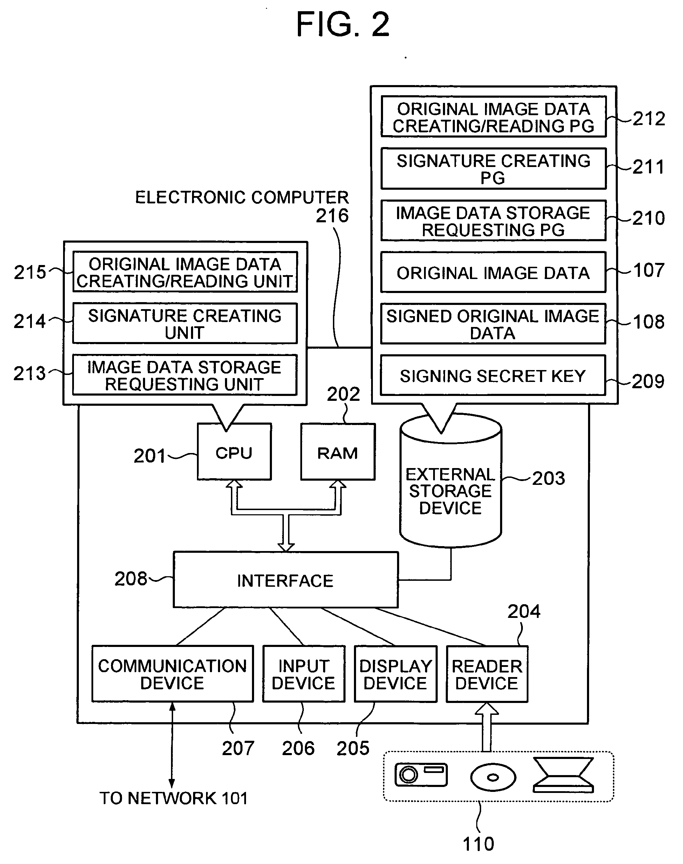

Fig. 2 shows the configuration of the signer's apparatus 102 schematically. This signer's apparatus 102 is an electronic computer 216 having a general configuration including: a CPU 201; a RAM 202 for functioning as the working area of the CPU 201; an external storage device 203 such as an HD; a reader device 204 for fetching data from a scanner, a digital camera, or the external medium 110 such as an FD or a CD-ROM; a display device 205 such as a display; an input device 206 such as a mouse or a keyboard; a communication device 207 for communicating with another device via the network; and an interface 208 for controlling the data communications among the aforementioned individual components.

The external storage device 203 of the signer's apparatus 102 is stored with an original image data creating/reading PG (program) 212, a signature creating unit PG 211; an image data storage requesting unit PG 210; the original image data 107; the signed original image data 108 and a signing secret key 209. Here, the original image data creating/reading PG 212, the signature creating PG 211 and the image data storage requesting PG 210 are embodied as processes of an image data storage requesting unit 213, a signature creating unit 214 and an original image data creating/reading unit 215, respectively, by the CPU 201. Here, an especially important entry is requested for the signing secret key 209 from the view point of security. It is, therefore, desired that the signing secret key is stored in an apparatus having a tamper resistance such as an IC card.

The signed original image data storage apparatus 103, the sanitizer's apparatus 104, the disclosed image data storage apparatus 105 and the verifier's apparatus 106 have a configuration similar to that of Fig. 2. However: the signed original image data 108, the signed original image data receiving PG, the signed original image data storage PG, the signed original image data sending PG in the signed original image data storage apparatus 103; the signed original image data receiving PG, the disclosed image data creating PG, the disclosed image data storage requesting PG, the signed original image data 108 and the disclosed image data 109 in the sanitizer's apparatus 104; the disclosed image data 109, the disclosed image data receiving PG, the disclosed image data storage PG and the disclosed image data sending PG in the disclosed image data storage apparatus 105; and the disclosed image data receiving PG, the disclosed image data browsing PG, the disclosed image data verifying PG, the disclosed image data 109 and the verifying public key in the verifier's apparatus 106 are stored in their individual external storage device 203.

The foregoing individual PGs are read in the RAM 202 and executed by the CPU 201 in each of the apparatus stored therewith so that they realize the following explanation.

Moreover, each of the PGs may be either stored beforehand in the external storage devices 203 of each of the apparatus or introduced, if necessary, from another apparatus through the removable storage medium 108 or a communication medium (e.g., digital signals or carrier waves, or communication lines using the former).

Processing flows for exchanging the data between each of the apparatus are schematically explained in the following.

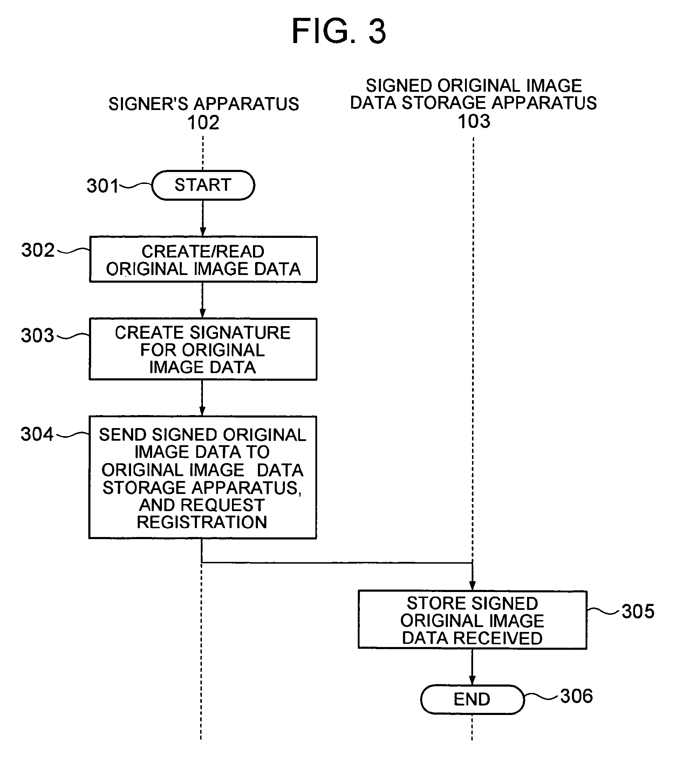

Fig. 3 schematically shows the processing flow till the original image data 107 is signed in the signer's apparatus 102 so that the signed original image data 108 is stored in the signed original image data storage apparatus 103.
301: Start.
302: The original image data 107 is created/read.
303: The signature is created for the original image data 107 by using the signing secret key 209.
304: The signed original image data 108 is sent to the signed original image data storage apparatus 103, and its registration is requested.
305: The signed original image data 108 received is stored.
306: End.

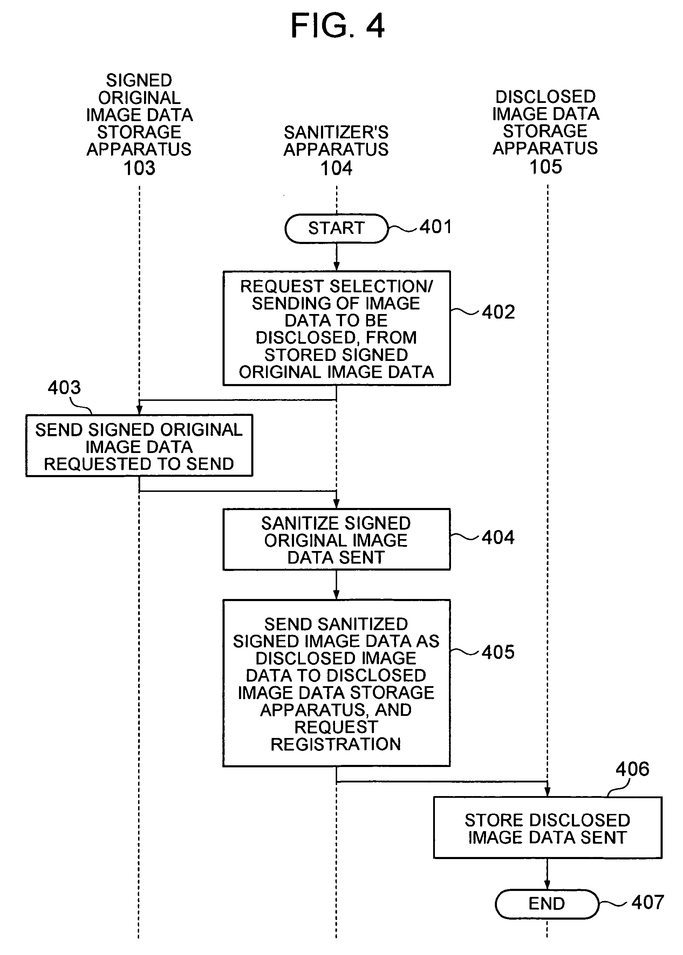

Fig. 4 schematically shows the processing flow till the signed original image data 108 stored in the signed original image data storage apparatus 103 is sanitized in the disclosed image data storage apparatus 105 and stored as the disclosed image data 109.
401: Start.
402: The selection/sending of image data to be disclosed is requested from the stored signed original image data 108.
403: The signed original image data 108 requested to send is sent.
404: The portion not to be disclosed is determined for the signed original image data 108 and is sanitized.
405: The disclosed image data 109 sanitized is sent to the disclosed image data storage apparatus 105, and its registration is requested.
406: The disclosed image data 109 sent is stored.
407: End.

Here, the sanitization is a process to delete information existing in a region of digital data. In the case of the image data, for example, the sanitization can be realized by substituting black image data. Note that the sanitized data need not always be limited to the black image data but may use a mosaic image data and so on.

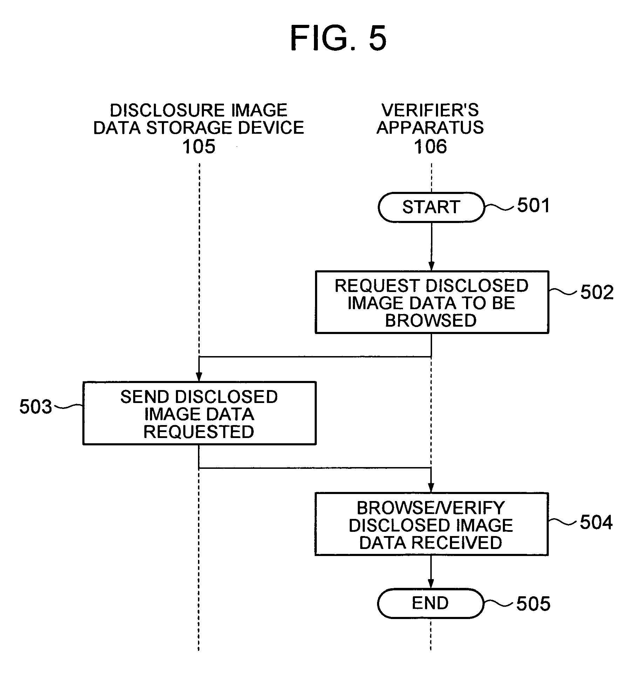

Fig. 5 schematically shows the processing flow till the disclosed image data 109 is sent from the disclosed image data storage apparatus 105 to the verifier's apparatus 106 and is verified by the verifier's apparatus 106.
501: Start.
502: Disclosed image data 109 to be verified is requested to send.
503: The disclosed image data 109 requested is sent.
504: The disclosed image data 109 received is browsed/verified.
505: End.

The first embodiment describes an example in which one of the well known file formats for image data "JPEG" is applied to digitally signed document sanitizing scheme. The overview of JPEG file format is described at first before explaining the first embodiment. There are two kinds of JPEG file format, a reversible transform format and an irreversible transform format, but the following explanation deals with the irreversible transform format. Note that, the specification of JPEG file format is described in the following publications.

"ISO/IEC 10918-1: Information technology - Digital compression and coding of continuous-tone still images: Requirements and guidelines" 1994.

William B. Pennebaker, Joan L. Mitchell, "JPEG STILL IMAGE DATA COMPRESSION STANDARD" Van Nostrand Reinhold, 1992.

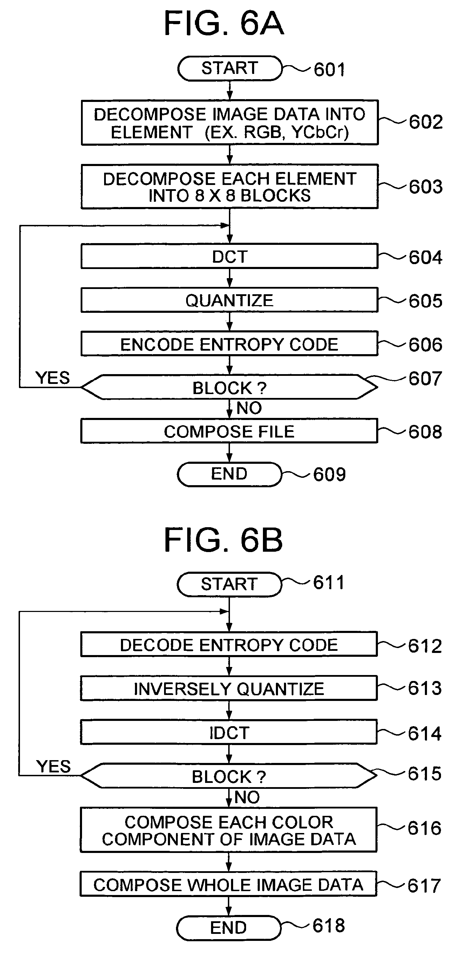

Fig. 6A schematically shows a processing procedure for transforming original image data into the JPEG file. Basically, JPEG file can be made the following transformation from an image data. Note that, in Fig. 6A, hexagonal steps (e.g., Step 607) denote conditional branches. In the following, all the hexagonal steps in the flow charts denote the conditional branches.
601: Start.
602: The inputted image data is decomposed into color components (e.g., RGB).
603: Each element is decomposed into 8 x 8 pixels (as will be called the "JPEG elements").
604: A DCT (Discrete Cosine Transform) is applied to all the JPEG elements to decompose it into sixty-four frequency components.
605: The data after the DCT is quantized.
606: The quantized data is encoded by an entropy coding. Of the decomposed sixty-four frequency components, the DC component is entropy-encoded for the difference with the last JPEG elements.
607: If a JPEG element to be processed still exits, go to Step 604. Otherwise go to Step 608.
608: Header information or the like is applied to compose the JPEG file.
609: End.

Entropy code is a coding method which assigns code words according to the occurrence of the symbol to be inputted to the encoder so that the length of the encoded data is short. Note that, two kinds of entropy code are adopted in JPEG file format, the Huffman codes and the arithmetic codes. The input for the entropy encoding at Step 606 has been quantized at Step 605 from the image data transformed into the frequency components by the DCT at Step 604. In the entropy encoding at Step 606, the AC components are processed for each JPEG element independently and therefore they have no influence of other JPEG elements, but the DC components are encoded for the difference from the DC components of the last JPEG element and therefore they are influenced by other JPEG elements.

Fig. 6B schematically shows the inverse transform from JPEG file. This inversion transform is processed as follows.
611: Start.
612: Each JPEG element is decoded by the entropy code.
613: The decoded data is inversely quantized.
614: The data is transformed by the inverse discrete cosine transform (IDCT).
615: If a JPEG element to be processed still exits, go to Step 612. Otherwise, go to Step 615.
616: The image data for each color component is composed.
617: The whole image data is composed.
618: End.

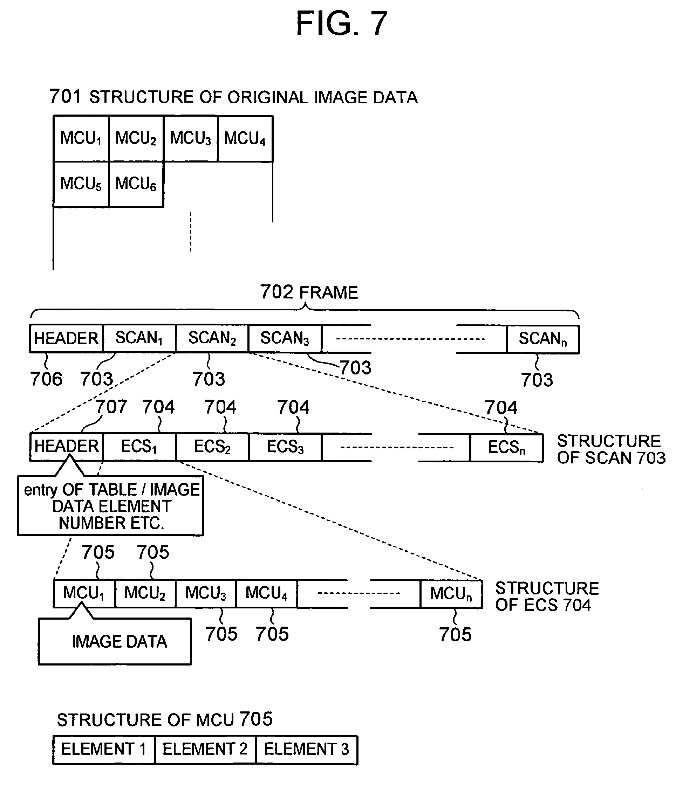

Fig. 7 shows a fundamental structure of JPEG file. JPEG file is composed of a plurality blocks called "MCU 705". MCU 705 is composed of a plurality of JPEG elements, and the JPEG file is configured at a plurality of MCU 705, which is constructed at Step 608 in Fig. 6A. The header information (706, 707) in the frame 702 and a scan 703 is stored with information such as the size of the image data and the definition of the table to be used for decoding the entropy encoding, quantization and so on. In the JPEG, there are two redundant segments called the "APP segment" and "COM segment", which can be utilized to give JPEG file an extra information.

The following shows the details of the signer's apparatus 102, the sanitizer's apparatus 104 and the verifier's apparatus 106, in which the digitally signed document sanitizing scheme is applied to JPEG file format. In the following explanation, it is assumed that the file format of original image data 107 is JPEG file. If an image data to be signed has an different file format from the JPEG, the image data can be transformed into the JPEG file which is the original image data 107.

The signer's apparatus 102 receives the original image data 107 and decomposes the original image data 107 into subblocks (as will be called the "sanitizing blocks"), which is a minimum unit to be sanitized. Since there may be sampling (pixel skipping) of image data for a color component when an image data is transformed into JPEG file, sanitizing block can be defined by one or more MCU 705. The original image data 107 divided into the plural sanitizing blocks is signed by using the signing secret key 209.

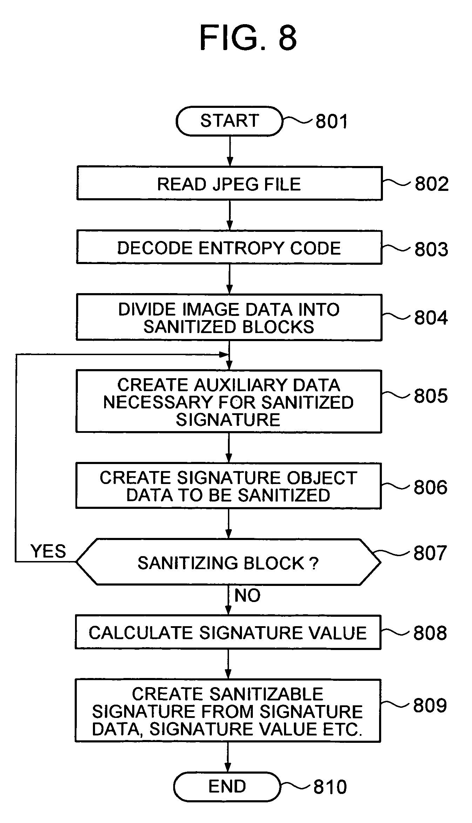

Fig. 8 schematically is the flow chart that shows the digitally signed document sanitizing scheme applied to the JPEG file. In the entropy encoding of the JPEG, as described hereinbefore, of each of the frequency components decomposed by the DCT transform, the DC components are encoded by taking the difference with the last JPEG element. In order to apply digitally signed document sanitizing scheme to JPEG file, therefore, Step 612 shown in Fig. 6B, which is the decoding step of the entropy code, is applied to the JPEG file inputted to the signer's apparatus 102. In the following, the resultant data is called the intermediate data. The processing procedure is as follow.
801: Start.
802: The original image data (i.e., the JPEG file) is read.
803: The entropy codes are decoded into the intermediate data.
804: The original image data transformed into the intermediate data is divided into sanitizing blocks.
805: For each sanitizing block, the auxiliary data is created for generating the signature of the digitally signed document sanitizing scheme (as will be called the "sanitizable signature").
806: The input (as will be called the "signature object data") from the data of the sanitizing block and the auxiliary data to a signature engine is calculated.
807: If a sanitizing block to be processed still exits, go to Step 805. Otherwise, go to Step 808.
808: By using the signature object data calculated from all sanitizing blocks and the signing secret key, the signature value is calculated.
809: The sanitizable signature is created from the auxiliary data and the signature value.
810: End.

Here, the signature engine is an operation for calculating/verifying the signature value by using digital signature algorithm such as the one based on RSA or DSA. The auxiliary data is the one which is necessary for creating sanitizable signature, and corresponds to a random number to be attached to every sanitizing block in SUMI-4 (as referred to Non-Patent Document 2), for example. The signature object data is the input to a signature engine and corresponds to the concatenated hash values, which is calculated from every sanitizing block attached a random number in SUMI-4, for example. SUMI-4 will be schematically explained hereinafter.

Not only, the sanitizable signature may be stored in the APP segment or the COM segment in the signed JPEG file but also it may be stored as a different file from the signed JPEG file. Moreover, JPEG file has information on the size of the image data in the header and the end of the JPEG file can be discriminated with the Marker called the "EOI", which indicates the end of the image, and therefore sanitizable signature can put the back of EOI marker in the signed JPEG file.

When the image data is divided into the sanitizing blocks at Step 804, the region information of sanitizing blocks may be given as an area such as a rectangle or circle by means of the input device 206 such as a mouse, for example. Alternatively, the image data may be automatically divided into a plurality of rectangles having a same size or some areas which are extracted by some image recognition device from the image data.

Sanitizable signature created by the foregoing procedure contains the auxiliary data and the signature value. The header information of the sanitizable signature includes the region information of sanitizing blocks, the state, disclosed or non-disclosed, of sanitizing blocks and so on.

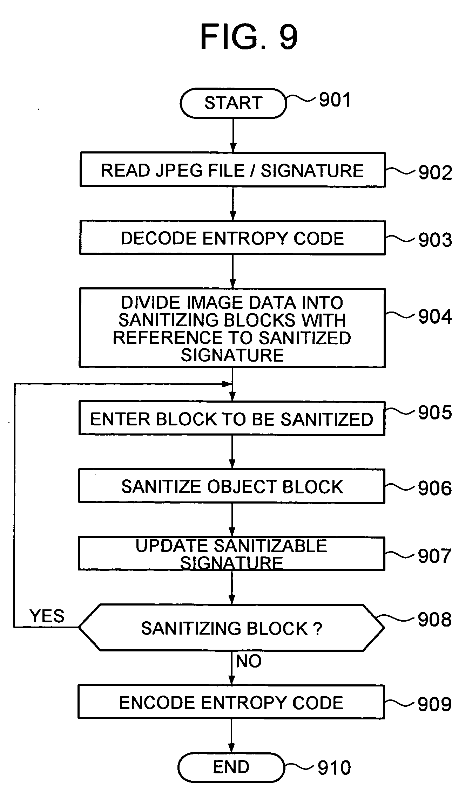

The sanitizer's apparatus 104 requests the signed original image data storage apparatus 103 to send the signed original image data 108 to be disclosed, and sanitizes the signed original image data 108 received from the signed original image data storage apparatus 103. The sanitization is performed for some sanitizing blocks. Fig. 9 schematically shows the sanitizing processing flow to be performed in the sanitizer's apparatus 104. This processing procedure is explained in the following.
- 901:: Start.
- 902:: The original image data 107 (i.e., the JPEG file) and the sanitizable signature are read from the signed original image data 108.
- 903:: The entropy code of the original image data 107 is decoded into the intermediate data.

- 904:: With reference to the header information in the sanitizable signature, the original image data 107 transformed into the intermediate data is divided into the sanitizing blocks.
- 905:: The sanitizing block to be sanitized is designated.
- 906:: The sanitizing block designated at Step 905 is sanitized.
- 907:: The sanitizable signature corresponding to the designated sanitizing block is updated.
- 908:: If sanitizing block to be sanitized still exits, go to Step 905. Otherwise go to Step 909.
- 909:: The intermediate data is entropy-encoded.
- 910:: End.

The sanitization process of digitally signed document sanitizing scheme of the prior art is performed by deleting the subblock itself from the document. In this case, however, the sanitized document is not displayed properly if the signed document is a digital image data. At Step 906, therefore, sanitizing blocks to be sanitized are substituted by either some image data or a single color (as will be called the "substitute image data"). Note that, in the transformation into JPEG file, as has been described hereinbefore, each JPEG element is transformed into the frequency component, then is quantized and entropy-encoded. In this entropy encoding, the DC components of the JPEG elements are encoded for the difference with the last JPEG element and therefore they influence other JPEG elements. In the sanitizer's apparatus 104, therefore, not only JPEG elements in sanitizing block to be sanitized but also the other JPEG elements is entropy- decoded and the sanitizing block to be sanitized is substituted by the substitute image data. Then, the entropy encoding for the intermediate data is done.

In the process of the transformation into the JPEG file, as has been described hereinbefore, the DC component is entropy-encoded for the difference with the last JPEG element. This is advantageous from the viewpoint of the data compression. However, this might be a disadvantage because an error propagates the following JPEG elements. The JPEG file format has a structure called the "interval" for preventing from such error propagation. JPEG file can have a plurality of intervals, each of which is composed of the plural MCU 705. In order to prevent the error propagation the DC component of the first block of each interval is entropy encoded the original DC component of JPEG element, not the difference with the last JPEG element. Therefore, for the signed JPEG file that utilizes interval, all the JPEG elements of the signed original image data need not always be transformed into the intermediate data. Note that, the handling of the substitute image data will be described hereinafter.

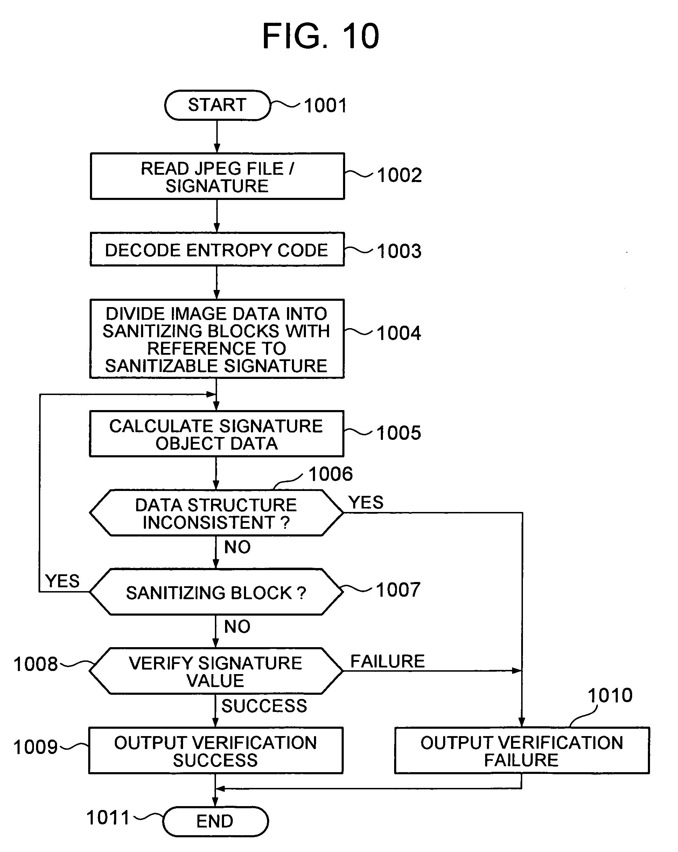

The verifier's apparatus 106 requests the disclosed image data storage device 105 to send the disclosed image data 109 to be browsed, so that the disclosed image data 109 received from the disclosed image data storage apparatus 105 is browsed/verified. Fig. 10 shows the verifying procedure to be performed in the verifier's apparatus 106. This processing procedure is explained in the following.
- 1001:: Start.
- 1002:: The disclosed image data (i.e., JPEG file) and the sanitizable signature are read.
- 1003:: The entropy code of the image data is decoded.
- 1004:: With reference to the header information of the sanitizable signature, the disclosed image data which is transformed into the intermediate data is divided into the sanitizing blocks.
- 1005:: With reference to the sanitizable signature, the signature object data of the sanitizing block is calculated.
- 1006:: If the data structure is so inconsistent at Step 1005 , e.g., the original image data exists in the sanitizing block which is sanitized, then go to Step 1010. Otherwise, go to Step 1007.
- 1007:: If the sanitizing block still exists, go to Step 1005. Otherwise, go to Step 1008.
- 1008:: The signature verification is performed by using the signature object data calculated from every sanitizing block at Step 1005, the verifying public key and the signature value in the sanitizable signature. If the verification succeeds, go to Step 1009. Otherwise go to Step 1010.
- 1009:: Output the verification success and go to Step 1011.
- 1010:: Output the verification failure and go to Step 1011.
- 1011:: End.

The following explains an example, which shows processing procedure of the signer's apparatus 102, the sanitizer's apparatus 104 and the verifier's apparatus 106 when digitally signed document sanitizing scheme is applied to JPEG file. Although five methods have been proposed for digitally signed document sanitizing scheme, the following describes the case in which SUMI-4 is applied (as referred to Non-Patent Document 2). It is assumed that the entry of the substitute image data is common through the system. Before presenting the actual processing procedure, the summary of SUMI-4 is explained in the following.

In SUMI-4, a document to be signed is divided into a plurality of subblocks (i.e., sanitizing blocks), and a random number is attached to every sanitizing block. The hash value of every sanitizing block attached the random number is calculated, and the signature value is calculated by using the signing secret key 209 for the concatenated hash values calculated from every sanitizing blocks in the document. In the sanitizing phase, for all sanitizing blocks to be sanitized, the sanitizing blocks themselves and the random number attached to the sanitizing block are deleted, and the hash value of the sanitizing block is made public instead of the sanitizing block and the random number. In the verification phase, the signed document is verified by the signature value, the verifying public key and the concatenated hash values which is composed of the calculated one from the sanitizing block and the random number for the disclosed sanitizing blocks and of the one which is publicly known for the non-disclosed sanitizing blocks.

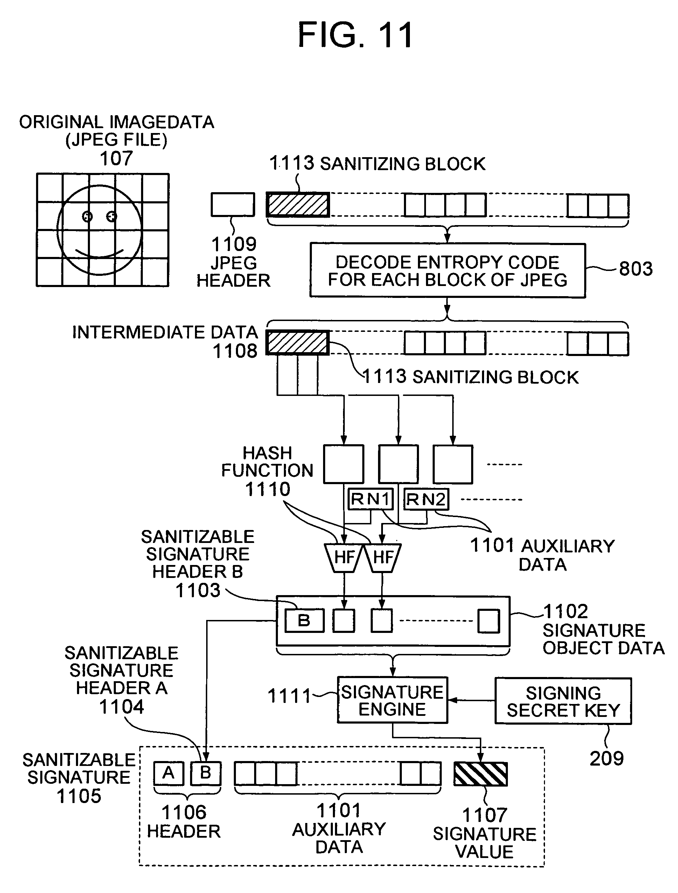

Fig. 11 schematically shows the procedure in the signer's apparatus 102,which applies SUMI-4 to a JPEG file, and the data structure at the procedure. In Fig. 11, RN1, RN2 and so on denote random number (i.e., auxiliary data 1101), which are attached to every sanitizing block of the original image data 107. Moreover, HF denotes a hash function 1110 to be used for calculating hash values from the random number and the sanitizing block.

The original image data 107 (e.g., the JPEG file) is transformed into the intermediate data 1108 by decoding the entropy code (at Step 803). The intermediate data of each sanitizing block 1113 (at Step 804) is attached random number (i.e., the auxiliary data 1101) (at Step 805). Then, the hash value for each sanitizing block which is attached random number is calculated (at Step 806). The calculated hash values are connected and the dividing information of the sanitizing block 1113 (as will be called the "sanitizable signature header B" 1103) is attached in order to prevent the alteration resulting from the interchange of the sanitizing blocks. The signature value 1107 is calculated (at Step 808) by using the signing secret key 209 and the signature object data 209. the sanitizable signature header B 1103 describes that the n-th byte to m-th byte in the signed JPEG file is one sanitizing block for example.

The signature value 1107 calculated by the foregoing procedure, the random number (i.e., the auxiliary data 1101) attached to each sanitizing block 1113, the sanitizable signature header B 1103, and a sanitizable signature header A 1104 indicating which sanitizing block is sanitized, composes the sanitizable signature (at Step 809). The sanitizable signature header A 1104 describes the information such that the n-th sanitizing block is sanitized for example.

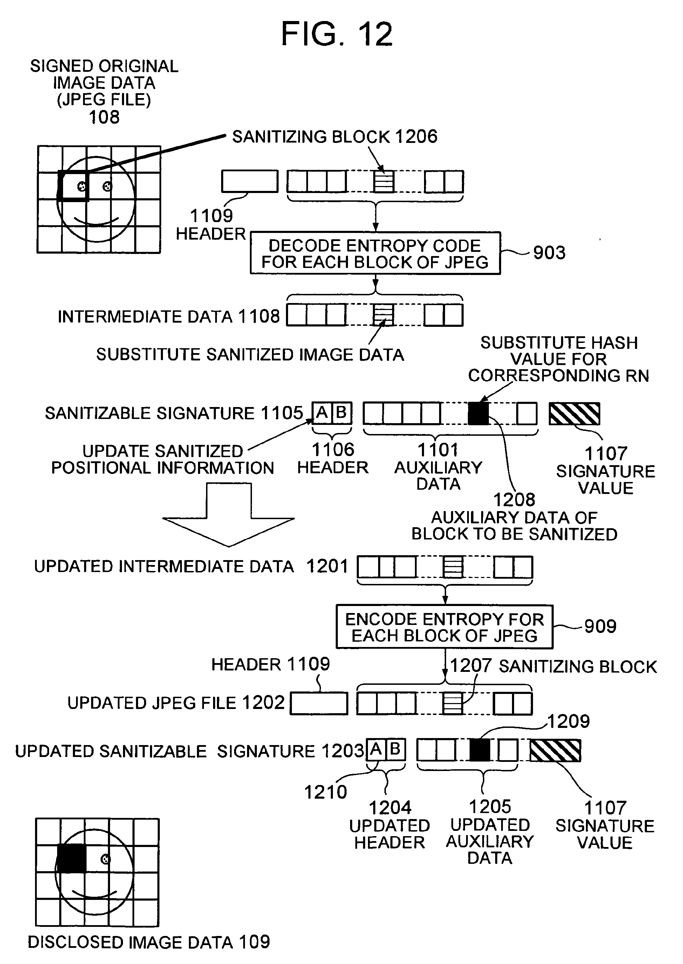

Fig. 12 schematically shows the sanitizing procedure to the signed original image data 108 created by the above procedure in the sanitizer's apparatus 104 and the data structure at the procedure. In the sanitizer's apparatus 104, the entropy code of the signed original image data 108 is decoded (at Step 903) to acquire the intermediate data 1108. For the intermediate data 1108, the intermediate data is divided into sanitizing blocks from the header information 1106 of the sanitizable signature 1105(at Step 904).

The sanitizing block to be sanitized is designated (at Step 905), and the designated sanitizing block 1206 is substituted the substitute image data (at Step 906). The auxiliary data 1208 (i.e., the random number) for the sanitizing block to be sanitized is substituted for the hash value of the sanitizing block 120 and the sanitizable signature 1105 is updated(at Step 907). Then, the entropy encoding is performed again to update the JPEG file (at Step 909). Note that, in the procedure thus far described, the entropy encoding of all the JPEG elements need not be performed depending on the structure of the JPEG file.

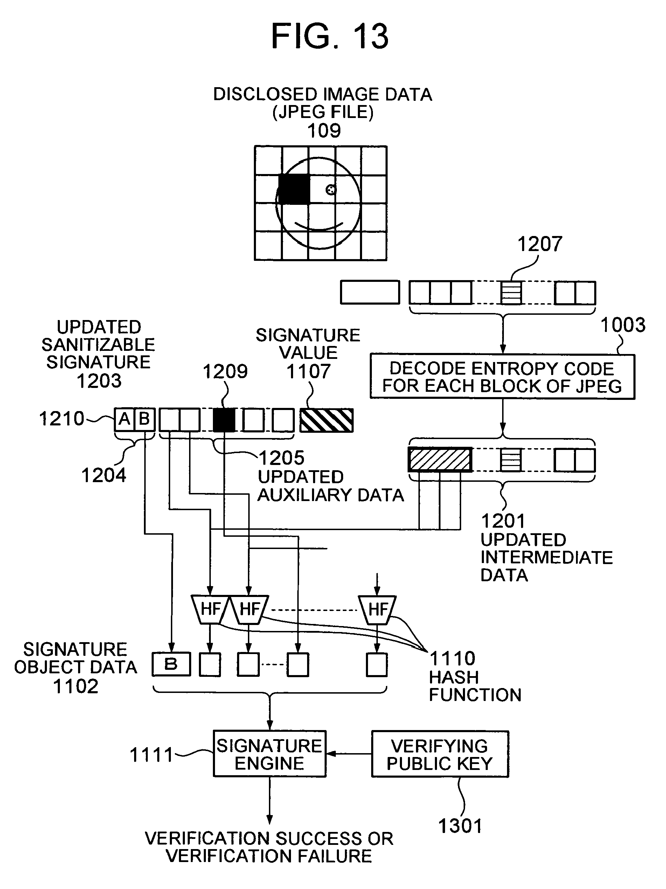

Fig. 13 schematically shows the verifying procedure to be performed by the verifier's apparatus 106 on the disclosed image data 109 created by the foregoing procedure, and the data structure at that procedure. The verifier's apparatus 106 decodes the entropy of the disclosed image data (at Step 1003) to create intermediate data 1201. With reference to the header 1204 of the sanitizable signature 1203, moreover, the disclosed image data is divided into the sanitizing block 1113 (at Step 1004), and hash value is calculated for each disclosed sanitizing block 1113 by using the corresponding auxiliary data 1205 (e.g., a random number) in the sanitizable signature 1203(at Step 1005). If the sanitizing block is not disclosed, the auxiliary data is the hash value and it is verified whether or not a sanitizing block 1207 is coincident with the substitute image data commonly used in the system. If inconsistent, the procedure is quit and output the verification failure. If the data is so inconsistent that no auxiliary data 1101 corresponds to the unsanitizing block 1113, the verification failure is outputted to stop the procedure (at Step 1006).

Finally, from the signature object data 1102 obtained by the foregoing procedure and the signature value 1107 in the sanitizable signature 1105, the signature verification is performed by using the verifying public key, and the results are outputted (at Steps 1008 to 1010).

In the embodiment thus far described, there has been described the example using the common image data as the substitute image data in the system, but the substitute image data has not to be common in the system. This means that not substituting the common substitute image data in the system but substituting an arbitrary image data / color in the sanitizer's apparatus 104 is possible. In this case, however, the disclosed sanitizing block 1113 might be misunderstood in the verifier's apparatus 106. It is, therefore, desired from the viewpoint of security that a proper substitute image data can be designated, or that which sanitizing block 1113 is disclosed should be displayed when the disclosed image data 109 is browsed.

An arbitrarily image can be used as the substitute image data by a method for designating a proper substitute image data, for example. If the substitute image data is an arbitrarily one, the information of the substitute image data of each sanitizing block 1113 is stored in the sanitizable signature 1105. Then, it is desired from the viewpoint of security to contain the substitute image data in the signature object data 1102,to display which the sanitizing block is sanitized in the verifier's apparatus 106, and to confirm whether or not the sanitizing block is sanitized with the authentic substitute image data. If the substitute image data is the signature object data 1102, the substitute image data is set in the signer's apparatus 102. If the substitute image data is designated in the sanitizer's apparatus 104, the sanitizer can be specified by generating the sanitizable signature using the signing secret key of the sanitizer for the substitute image data and the disclosed image data 109 in the sanitizer's apparatus 104. In the case of SUMI-4, for example, if the sanitizer sanitizes the corresponding substitute image data for the sanitizing block instead of the sanitizing block itself, the sanitizing block can not be sanitized anymore. Therefore, the inhibition of an additional sanitization can be realized like the method which has been proposed in Non-Patent Document 2.

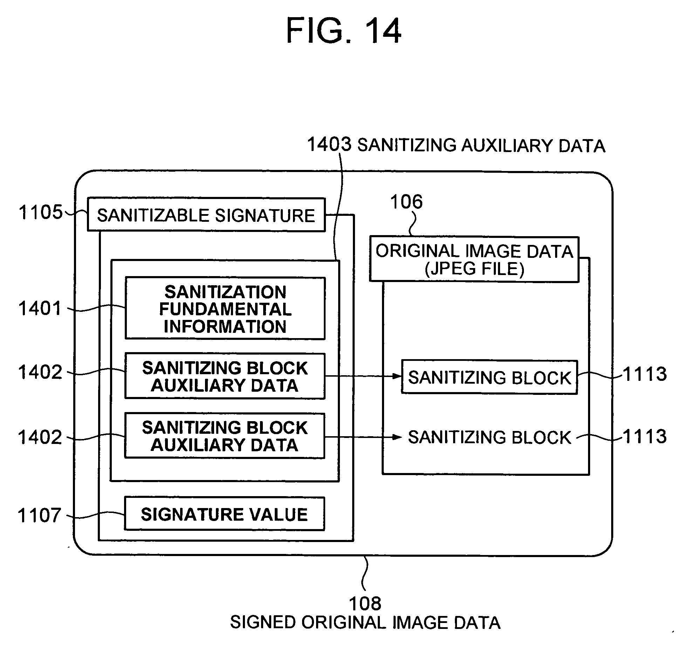

In order to create the sanitizable signature 1105 in the signer's apparatus 102, it is necessary to attach the auxiliary data 1101 such as a random number to the sanitizing block 1113. It is also necessary to decide a unique region in the JPEG file from given the region information about from the sanitizing blocks 1113. Fig. 14 schematically shows the format of the sanitizable signature 1105 for describing those pieces of information. The sanitizable signature 1105 is configured to have the signature value 1107, sanitization fundamental information 1401 and the sanitizing block auxiliary data 1402. The information which is contained in the sanitization fundamental information 1401 and the sanitizing block auxiliary data 1402 is described later. In the following, the sanitization fundamental information 1401 and the sanitizing block auxiliary data 1402 is called together the "sanitizing auxiliary data" 1403.

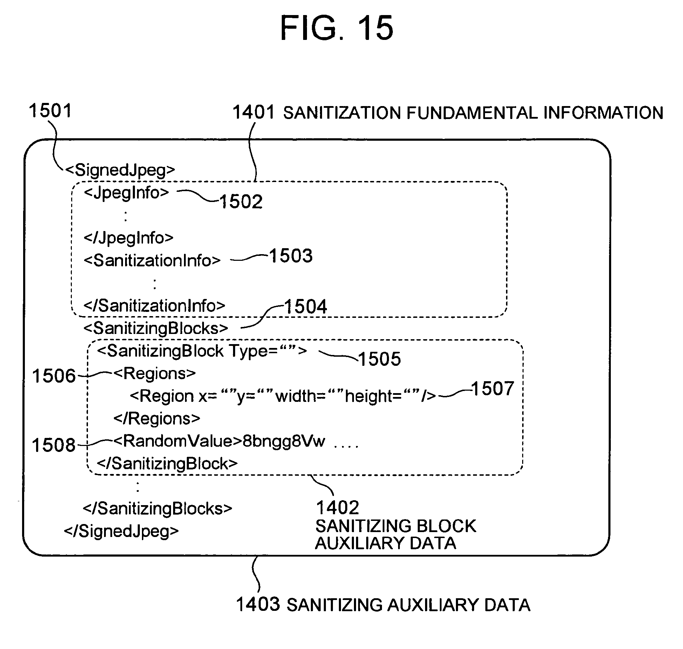

When the signer's apparatus 102 creates the auxiliary data which need to generate the sanitizable signature (at Step 805 in Fig. 8), it writes the header A 1104 expressing the information of the sanitizing block 1207 and the header B 1103 having the area information of the sanitizing block, into the sanitization fundamental information 1401. Into the sanitization fundamental information 1401, the signer's apparatus 102 writes the information such as the size or file name of the original image data 107 to be signed, or the information (in SUMI-4, for example, the identifier of the hash function 1110 to be used for calculating the hash value of each sanitizing block, and of a signature engine 1111 used) which is necessary for creating the sanitizable signature 1105. Into the sanitization fundamental information 1401, moreover, the signer's apparatus 102 may write the sanitizing policy, e.g., the sanitization of only the sanitizing block A is allowed but the sanitizing block A must be sanitized if the sanitizing block B is sanitized. Note that, the header A 1104, the header B 1103 and so on need not always be described into the sanitization fundamental information 1401. In the example (as referred to Fig. 15) utilizing XML language described later, for example, information is attached to sanitizing blocks (into the sanitizing block auxiliary data 1402).

The signer's apparatus 102 describes into the sanitizing block auxiliary data 1402 either the auxiliary data 1101 such as the random number attached to the sanitizing block. In addition, the information (i.e., the header A 1104) on the state of the sanitizing block (disclosure or non disclosure) and the region information (i.e., the header B 1103) of the sanitizing block are described into the sanitizing block auxiliary data 1402, in case they were not described into the sanitization fundamental information 1401. In the example (Fig. 15) utilizing the XML to be described, the information of the header A 1104 and the header B 1103 are described into the sanitizing block auxiliary data 1402. Moreover, the sanitizing policy may be described together with the sanitizing block auxiliary data 1402. For example, if the sanitizing policy defines that the sanitizing block B must be sanitized if the sanitizing block A is sanitized, the sanitizing block auxiliary data 1402 corresponding to the sanitizing block A has the information that specifies the sanitizing block auxiliary data 1402 corresponding to the sanitizing block B.

This can be realized in the following manner if the XML shown in Fig. 15 is utilized. At first, the signer's apparatus 102 adds the element (e.g., RelatedSanitizingBlock element) for describing the related information to the inside of a SanitizingBlock element 1505 which describes the sanitizing block auxiliary data 1402. In the SanitizingBlock element 1505 of the sanitizing block A, moreover, the path to the sanitizing block B is entered into the RelatedSanitizingBlock element by utilizing an XPath.

In the case RelatedSanitizingBlock element exists, the sanitizer's apparatus 104 refers to the information in the RelatedSanitizingBlock element, if the sanitizing block A is sanitized and sanitizes the sanitizing block B, too according to the information described in RelatedSanitizingBlock element. If the verifier's apparatus 106 verifies the disclosed image data 109, it confirms whether or not the sanitizing block B is sanitized if the sanitizing block A is sanitized. The detail of the example of the sanitizable signature 1105 utilizing the XML, as shown in Fig. 15, is described later.

When the sanitizable signature 1105 is created in the signer's apparatus 102, for example, the sanitization fundamental information 1401, the auxiliary data 1101 of each sanitizing block, and the signature value 1107 are created according to the procedure of Fig. 8 from the kind of the digitally signed document sanitizing scheme to be used, such as the hash function 1110 to be used therein, the original image data 107, and the division information of the sanitizing block 1113, and then the results are used to configure the sanitizable signature 1105. The division information into the sanitizing block 1113 can be utilized the information such as a rectangle or a circle, which has been designated by the input device 206 such as the mouse, as has been described hereinbefore. In the sanitizer's apparatus 104 and the verifier's apparatus 106, the calculation of the hash value for each sanitizing block is performed for the sanitization and the verification based on the foregoing information. The following explains the method for realizing the sanitizable signature 1105 using the XML.

Fig. 15 presents an example, in which the format of the sanitizable signature 1105 shown in Fig. 14 is described by XML language. In this format, the sanitizing auxiliary data 1402 is entered in SignedJpeg element 1501. SignedJpeg element 1501 is configured of three elements, Jpeginfo element 1502, Sanitizationlnfo element 1503 and SanitizingBlocks element 1504. The following schematically describes the format, and explains the creation, the sanitization and the verification using the format. At first, this format is schematically explained.

The JpegInfo element 1502 and the SanitizationInfo element 1503 correspond to the sanitization fundamental information 1401 shown in Fig. 14. Into these elements, there is the information such as the size or file name of the original image data 107 to be signed, or the information (in SUMI-4, for example, the algorithm identifier of the hash function 1110 to be used for calculating the hash value of each sanitizing block 1113, and of the signature engine 1111 used) which is necessary for creating the sanitizable signature 1105. The SanitizingBlocks element 1504 is configured of SanitizingBlock elements 1505 which describes the sanitizing blocks 1113 and the sanitizing block auxiliary data 1402.

In SanitizingBlock element 1505, the area in JPEG file corresponding to a sanitizing block 1113, the attached random number, and the state (i.e., the disclosure or nondisclosure) of the sanitizing block are entered into a Regionselement 1506, a RandomValue element 1508 and a Type attribute, respectively. The Regions element 1506 is configured of Region elements 1507, in which the sanitizing block is expressed as a rectangular area with the attributes "x", "y", "width" and "height" of the Region element 1507.

In Fig. 15, one rectangular area in the JPEG file is designated by one Region element 1507 as the sanitizing block 1113. By using the Region element 1507 in plurality, however, a plurality of rectangular areas may also be designated as one sanitizing block. In addition to the foregoing rectangular expression, moreover, the sanitizing block of a circular area may also be designated by designating a center point and a radius, for example.

It should be noted that, when a sanitizing block is designated in JPEG file, the minimum size of sanitizing block is MCU. Also, if the circular area as the sanitizing block is designated with the center point and the radius, as described above, a rule has to be adopted such that the sanitizing block can be uniquely decided from the given information. In the case of application to other formats or sanitization for the frequency components of the JPEG file which is applied the progressive encoding, as described later, the sanitizing block 1113 need not be based on MCU unit. Note that in order to sign the whole original image data, the SanitizingBlock element 1505 may be prepared in plurality so that the image data of the JPEG file to be signed may be wholly set as the sanitizing block 1113.

In the format shown in Fig. 15, as described above, the area information in JPEG file in a sanitizing block (i.e., the header B 1103 in Fig. 11) and the state of the sanitizing block (i.e., the header A 1104 in Fig. 11) are entered for each sanitizing block as the Type attribute of SanitizingBlock elements 1506 and the attributes of Region elements which is a child element of the SanitizingBlock element 1505, respectively. Depending on the digitally signed document sanitizing scheme to be used, the child elements other than those in Fig. 15 may be added to the SanitizingBlock element 1505. In the sanitizing scheme that enable to inhibit the additional sanitization proposed in Non-Patent Document 2, for example, a LegitimageMaskValue element is added to SanitizingBlock element 1505 besides the Random Value element 1508.

The following describes the creation and sanitization of the sanitizable signature 1105 on the original image data 107 by using the XML shown in Fig. 15 and the verification of the disclosed image data 109. The following description is made on the case of utilizing SUMI-4, but the case of utilizing other digitally signed document sanitizing scheme can also be realized as the similar processing described in the following.

When creating the sanitizable signature 1105, the signer's apparatus 102 enters the image data size of the original image data 107 to be signed, at first into the Jpeglnfo element 1502, and then enters the information such as the kind of digitally signed document sanitizing scheme to be used, such as SUMI-4, or the hash function 1110 to be used, into the SanitizationInfo element 1503. Then, the signer's apparatus 102 decodes the entropy code of the original image data 107 to be signed (at Step 803) and divides the image data into the sanitizing block 1113 (at Step 804).

The division into the sanitizing block 1113 may utilize the information which is given by means of the input device 206 such as the mouse, as has been described hereinbefore. Alternatively, the information previously divided from the original image data 107 into a plurality of sanitizing blocks is given to the signer's apparatus 102 by making use of the XML file so that the division into the sanitizing blocks 1113 may be made. This XML file to be utilized can realize by SignedInfo element 1501 which does not include RandomValue element 1508

Next, the signer's apparatus 102 attaches a random number to every sanitizing block 1113 (at Step 805). Then, the signer's apparatus 102 enters the character string encoded from the created random number by the Base 64 format, as the value of the RandomValue element 1508 shown in Fig. 15. Also, the signer's apparatus 102 reads the intermediate data 1108 of the sanitizing block 1113 corresponding to the created random number, and calculates the hash value (at Step 806). The signer's apparatus 102 repeats the above procedure for every sanitizing block 1113, calculates the signature object data 1102, and calculates the signature value 1107 by using the signing secret key 209 (at Step 808).

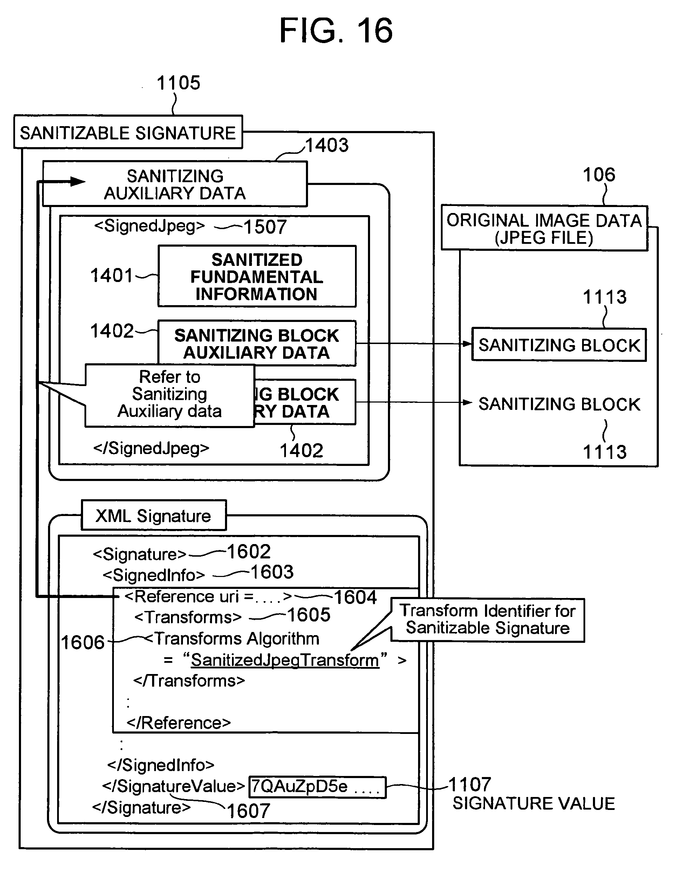

The signer's apparatus 102 newly creates SignatureValue element, for example, in addition to the SignedJpeg element, and enters the character string, which is obtained by decoding the calculated signature value 1107 by the Base 64 format, as the value of the SignatureValue element created. The Signature Generation utilizing XML signature which is described later, the signature value 1107 is entered as the Base 64 encoded character string into SignatureValue element in Signature element 1601 of XML Signature (as referred to Fig. 16). The creation of the auxiliary data 1101 such as the random number need not always be performed immediately before the calculation of the hash value. If the division information of the sanitizing block 1113 is given by utilizing the XML data, for example, the creation (at Step 805) of the auxiliary data 1101 may be performed as a preprocessing on the basis of the information of the XML data.

In the sanitizing procedure, the sanitizer's apparatus 104 decodes the entropy code of the signed original image data 108 (at Step 903), and sanitizes some sanitizing blocks 1206(at Steps 904 to 909). Then, as shown in Fig. 12, the random number of the sanitizing block 1206 to be sanitized is substituted by the corresponding hash value (at Steps 906 and 907). In the case of using the XML data shown in Fig. 15, the sanitizer's apparatus 104 is enabled to realize the sanitization, replacing the hash value of the corresponding sanitizing block 1206 by the Base 64 format as a character string for the value of the RandomValue element 1508. Alternatively, RandomValue element 1508 may be deleted, and HashValue element expressing the hash value may be newly created. This Hash value element may be entered the data which is the hash value of the sanitizing block 1206 encoded by Base64 format.

The sanitizer's apparatus 104 rewrites the value of Type attribute of SanitizingBlock element 1505 corresponding to the sanitized sanitizing block 1207, from the disclosure to the nondisclosure and updates the sanitizable signature 1203 updated. Note that, the entry of the sanitizing block 1206 to be sanitized can utilize the information given by the input device 206 such as the mouse. If the sanitizing block 1206 to be sanitized is always identical, for example, a list of the sanitizing block 1206 to be sanitized may be created by XML language and utilized to designate the sanitizing block 1206 to be sanitized.

In the verification of the sanitizable signature, the verifier's apparatus 106 decodes the entropy code of the disclosed image data (at Step 1003). With reference to the information of Regions element 1506 of Sanitizing Block element 1505, the verifier's apparatus 106 divides the disclosed image data 109 into the sanitizing blocks (at Step 1004). According to the value of the Type attribute , it confirms whether or not the sanitizing block 1113 is sanitized, and the signature object data 1102 is calculated(at Step 1005). It then verifies (at Step 1006) whether or not the necessary element exists in SanitizingBlock element 1505. The verifier's apparatus 106 repeats the above processing for all the sanitizing blocks 1113, and verifies the signature value 1107 by using the verifying public key 1301 and the calculated signature object data 1102(at Step 1008).

The sanitizable signature can be created and verified, as has been described hereinbefore, by utilizing the format shown in Fig. 15. In the following, the method for performing those Signature Generation and verification by utilizing the XML Signature as an example. XML Signature is the standard of the digital signature utilizing XML according to W3C. The XML Signature is detailed in the following.

W3C Recommendation, "XML-Signature Syntax and Processing", 2002.

Fig. 16 shows the example of the processing for creating and verifying the sanitizable signature 1105 which uses XML Signature. Both of the signature Generation and validation of XML Signature is configured of two procedures. The signature generation and validation of the sanitizable signature 1105 utilizing XML Signature will be described in the following.

The signature generation of XML signature is configured of two procedures, the reference generation for creating the Reference element and the signature generation for forming the Signature element. In the reference generation, Reference element is created by specifying the object to be signed as URI (Uniform Resource Identifier), by calculating the hash value of the object to be signed. In the signature generation, the signer's apparatus 102 creates the Signature element 1602 from SignedInfo element, which has Reference element created in the reference generation, and the SignatureValue element1607 by calculating the signature value by using the signing secret key 209. In addition, a Key-Info element and Object element can be contained in the Signature element 1602 so that information such as the verifying public key 1301 can be contained in the Signature element 1607. Note that, each object to be signed can be transformed by entering Transform element in the reference generation, if necessary.

In the validation of XML Signature, the hash value is calculated according to each Reference element, and compares the calculated Hash value with the value of a DigestValue element(the reference validation). Moreover, the SignedInfo element is verified (the signature validation) with the SignatureValue element by the verifying public key 1301. If either the Reference validation or the signature validation fails, the validation of XML Signature outputs failure.

With reference to Fig. 16, creating and verifying the sanitizable signature 1105 using XML signature are described by defining a new transformation for the sanitizable signature as Transform element 1606.

Here, the transformation for creating and verifying the sanitizable signature 1105 is entered as the Transform element 1606 into Reference element 1604. The input of the Transform element 1606 may be the XML data shown in Fig. 15. For this, the reference information (URI) to the SignedJpeg element 1507 may be entered into URI attribute of Reference element 1604, and the transformations for the creation and verification of the sanitizable signature 1105 may be entered into the first Transform element 1606 in that Reference element 1604. With reference to that XML data, the signer's apparatus 102 and the verifier's apparatus 106 calculate the signature object data 1102 for the original image data 107 to be signed (at Step 801 to Step 807)and for the disclosed image data 109 (at Step 1001 to Step 1007), respectively. The calculation and the verification of the signature value 1107 (at Steps 808, 809 and at Step 1008, 1009 and 1010) are performed in the signature generation and validation of XML Signature, respectively.

Here, in the case of utilizing the XML Signature, it is necessary to determine the method for referring to the JPEG file to be signed. It is possible to specify the JPEG file to be signed/verified by using on the reference information such as URI of the JPEG file to be signed, by entering the reference information into the JpegInfo element 1502 of the SignedJpeg element 1501, or to determine that the sanitizable signature 1105 is entered into the APP segment in the object JPEG file.

In the XML Signature, a plurality of Reference elements 1604 can be entered into the Signature element so that one signature can be given to the plural objects to be signed. By making use of this, a plurality of Reference elements 1604 is prepared and SignedJpeg element 1501 is entered with each Reference element 1604, so that one sanitizable signature can be given to the plural JPEG files.

In this embodiment, XML is utilized as an example which is enable to realize the sanitizable signature format shown in Fig. 14, but the realizing method is not limited to the XML. For example, ASN.1 or an originally defined format may be utilized for the expressing the data format. Furthermore, Fig. 16 shows the creation/verification of the sanitizable signature utilizing XML but need not always the XML Signature. For example, an element (e.g., a SignatureValue element) for entering the signature value 1107 simply under the SignedJpeg element 1501 may be added, for example, to create and verify the sanitizable signature by the procedures shown in Fig. 8 and Fig. 10.

The explanation of the foregoing embodiment has presented the example, in which the signer's apparatus 102 is realized by the electronic computer 216 having the general configuration, but may be different. A digital camera or a scanner apparatus may be used as the signer's apparatus 102. This modification is preferred from the viewpoint of security, because a signature is given to the image data photographed or scanned, before it is outputted to the outside of the apparatus.

In the embodiment, as has been described hereinbefore, the signature value is calculated by dividing the digitally signed document to be signed into a plurality of configurational element, by calculating each feature value of the configurational element, by combining the feature values into the signature object data and by calculating the signature value from the signing secret key and the signature object data. Note that the feature value is the one that is calculated from a digital data and that has properties; one-way and collision resistance. For example, feature value in SUMI-4 is the hash value calculated from a sanitizing block and the random value attached to the sanitizing block. For calculating the feature values, the intermediate data, which is decoded the entropy code of an image data to be signed, is used. Moreover, the sanitizable signature is configured from the necessary information for creating the signature object data, such as the information for the division into the configurational element, the information such as the random number for calculating the feature value, and the calculated signature value.

The signed image data is sanitized by dividing the signed image data with reference to the information in the sanitizable signature and by substituting other image data for the area to be sanitized. Also, the substitution of the image data is performed on the intermediate data decoded the entropy code of the signed image data and then the signed image data after sanitized is obtained by encoding the entropy code again. Moreover, the signature is updated by substituting the feature value of the configurational element before sanitized, for such information in the information needed for creating the signature object data in the signature as corresponds to the configurational element to be sanitized, and by adding the information for specifying the configurational element to be sanitized.

If the authenticity of an sanitized image data with the sanitizable signature is verified, the verification of the signature value in the signature is performed by dividing the signed image data with reference to the necessary information for creating the signature object data, by calculating the feature value other than the sanitized configurational element, and by using the signature object data combined and created with the feature value of the sanitized configurational element in the signature. Note that the intermediate data decoded the entropy code of the signed image data is used for calculating the feature value.

According to the embodiment, for the signed image data can be verified, a proper alteration (e.g., a sanitization) is acceptable.

In the foregoing embodiment, the entropy code of JPEG file is decoded, and the digitally signed document sanitizing scheme is applied to the resultant intermediate data. This is because the entropy encoding of the DC component is performed on the difference value with the last JPEG element. It is advantageous for the data compression, but it might have a disadvantage because an error propagates. As has been described hereinbefore, the JPEG has a structure called the "interval" for preventing the error propagation.

If the interval is adopted as the unit of sanitizing blocks, the digitally signed document sanitizing scheme can be applied without decoding the entropy code. For applying to an arbitrary JPEG file, however, JPEG file has to be reconfigured and the file size becomes larger than that of the foregoing embodiment.

As applying digitally document sanitizing scheme to JPEG file, the scheme can also be applied to other file formats of image data. Digitally signed document sanitizing scheme can be applied to JPEG2000 as follow, for example. JPEG2000 file is compressed by a transform called "wavelet transformation", which is applied to the entire image data unlike the transform to JPEG file. However, JPEG2000 file can also be configured as one JPEG2000 file by combining the data which are divided the original image into some rectangles and each of which is applied the wavelet transformation. Using this rectangle as the sanitizing block, the digitally signed document sanitizing scheme can be applied to JPEG2000 file format.

If the image data is decomposed into the low-frequency component and the high-frequency component, e.g., the progressive encoding of JPEG file format and JPEG2000, the frequency components can be used as the sanitizing block. In the contents distribution, for example, if the image data which is a low resolution one having only the low-frequency components is made public as a preview, the sanitizable signature can be used in order to verify whether the image data which is high resolution one having all frequency components is the originally same as the preview or not.

A bitmap file is configured of header information and image data. The header information is set with the size of image data, color information to be used and so on, and the image data is composed of color components such as RGB, gray scales, black-and-white in accordance with the color information in the header. In the foregoing embodiment, for JPEG file, the digitally signed document sanitizing scheme is applied to the intermediate data which is the decoded one of the entropy code of the image data. In the bitmap, however, since the image data is not transformed, the sanitizable signature can be created by utilizing the data directly as well as the creation of the sanitizable signature using the interval-utilizing JPEG file.

PNG and the Tiff file format are other well-known file format for image data. Digitally signed document sanitizing scheme can also be applied to those formats. In these formats, the file size may be reduced by using a reversible transformation. If the image data is composed of pixel or block data consisted of plural pixels, by using this block or pixel structure, digitally signed document sanitizing scheme can be applied. If a block consisting of image data is influenced other blocks due to its transformation like JPEG elements in JPEG file, digitally signed document sanitizing scheme can be applied to the intermediate data decoded the reversible transformation.

If the file can have arbitrary data other than the image data, e.g., APP and COM segment of JPEG file format, the sanitizable signature may include the image data or have as another file.

The PDF file is composed of objects. By utilizing this object, therefore, the digitally signed document sanitizing scheme of the embodiment can be applied. For example, one or more objects are designated as the sanitizing block. Like the substitute image data in the foregoing embodiment, moreover, the object to be substituted at the sanitization can be given as an object data in the sanitizable signature.

PDF file can have the image data such as JPEG file format, bitmap file format and so on as the object. In this case, the method described in the foregoing embodiment can be applied, i.e., the method for applying the digitally signed document sanitizing scheme to image data such as JPEG, bitmap and PNG file and so on, can be used as the implementation of digitally signed document sanitizing scheme for PDF file format.

Here, the TIFF is the name of the format developed by Aldus Corp. of U.S.A., and the Adobe, Adobe LOGO, Acrobat, Adobe PDF LOGO, Distiller and Reader are the registered trademarks or trade marks of Adobe Systems Incorporated of U.S.A. and other countries.

Other signature schemes besides the one based on RSA and the DSA can be used as the signature engine. Moreover, the digitally signed document sanitizing scheme may be the method other than SUMI-4.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. A method for assuring authenticity of digital image data, comprising in a signer's apparatus:
dividing a digital image data into a plurality of display areas;
calculating an image data corresponding to each of the divided areas;
calculating a feature value of the image data corresponding to each of the divided areas;
calculating a digital signature value for a combined data of the calculated feature values;
calculating a digital data expressing the digital image data, from the image data corresponding to each of the divided areas; and
transforming a data configured to include the digital signature value and the digital data, into a signed digital image data.

2. The method of claim 1, wherein the digital data expressing the digital image data is prepared by compressing the digital image data according to JPEG format.

3. The method of claim 2, wherein the image data corresponding to each of the divided areas are prepared by subjecting image data having an area of 8 x 8 pixels to a DCT transformation (Discrete Cosine Transform) and by quantizing the transformed image data.

4. The method of claim 1, wherein the feature value of the image data corresponding to each of the divided areas is the hash value of the image data corresponding to each of the divided areas and a hash value for a data prepared by combining the image data corresponding to each of the divided areas and a random number.

5. The method of claim 1, further comprising in a sanitizer's apparatus:
substituting another image data for the image data corresponding to one or more of the divided display areas;
calculating digital data expressing new digital image data from that another image data and the image data corresponding to the unsubstituted areas; and
containing the digital signature value, the digital data expressing the new digital image data, and the feature values of the image data corresponding to the substituted one or more areas, in the signed digital image data.

6. The method of claim 1, further comprising in a sanitizer's apparatus:
calculating the image data corresponding to each of the divided areas from the digital data expressing the digital image data;
calculating the feature value of the image data corresponding to each of the divided areas; and
verifying the digital signature value contained in the signed digital image data, for the feature values of the image data corresponding to each of the calculated areas and for the feature values of the image data corresponding to the substituted areas contained in the signed digital image data.

7. A digital signature method for providing a system for verifying the authenticity of sanitized digital data attached with digital signature, comprising:
dividing an object digital data with digital signature, into a plurality of areas;
calculating a feature value of the digital data for each divided areas;
calculating a digital signature value for a combined data of the feature values; and
providing the digital signature value and an information used when the feature values are calculated, as the digital signature for the digital data to be signed.

8. The method of claim 7, wherein the digital data for each of the divided areas which calculates the feature values are the data prepared by decoding the entropy code of the digital data to be signed.

9. A sanitizing method for sanitizing digitally signed digital data in a system for verifying the authenticity of sanitized digital data attached with digital signature, comprising:
substituting another digital data for the digital data of one or more areas prepared by dividing the digital data in the signed digital data the digital data is signed; and
updating the signature of the signed digital data by using the feature values corresponding to the digital data of the substituted.

10. A method for verifying the authenticity of sanitized digital data attached with digital signature, comprising:
dividing the digital data in the signed digital data into a plurality of areas when the digital data is digitally signed;
acquiring a feature value of the areas corresponding to sanitized portions of the signed digital data, from the digital signatures in the signed digital data;
calculating a feature value of the digital data for each of the plurality of areas corresponding to portions other than the sanitized portions; and
combining the acquired feature values and the calculated feature values thereby verifying the digital signatures in the signed digital data.

11. The method of claim 9, wherein, the entropy code used in the signed digital data is decoded into the intermediate data after the signed digital data is divided, then a portion of the decoded data is substituted by another digital data, and then the substituted data is entropy-encoded.

12. The method of claim 7, wherein the information used when the feature values are calculated includes an information which specifies each of the divided areas and an auxiliary data to be given a procedure to calculate the feature values.

13. The method of claim 7,
wherein the information used for the calculation of feature values is described with XML,
wherein calculating the feature value for each divided areas and combining the calculated feature values are realized in the processing of a Transform element in the reference generation of XML Signature by referring to the information described with XML, and
wherein the calculation of the digital signature value is performed by using the signature generation of XML Signature.

14. The method of claim 10,
wherein the information, which acquires the feature values of the sanitized areas and calculates the feature values of the other areas, is described with XML,
wherein calculating of the feature values for each of the divided areas and combining of the acquired and calculated feature values are realized in the processing of a Transform element in a Reference element in the reference validation of XML Signature by referring to the information described with XML, and
wherein the verification of the digital signature is performed by using the signature validation of XML Signature.

15. A digital data disclosure system comprising a signer's apparatus, a sanitizer's apparatus and a verifier's apparatus, which can verify the authenticity of digital data to be made public, by giving a signature to the digital data,
wherein the signer's apparatus includes:
a method to calculate feature value in which the digital data is divided into a plurality of configurational elements and in which the feature values of each of the divided configurational elements is calculated;
a method to create signature value in which the digital signature value of the signature object data prepared by combining every calculated feature values is created; and
a method to create signed digital data in which the digital signature value and the information used in the method to calculate the feature values in signer's apparatus as the digital signature of a digital data is joined as the digital signature,
wherein the sanitizer's apparatus includes:
a sanitizing method in which the digital data in the signed digital data is divided into a plurality of configurational elements by using an information in the digital signature and by substituting another data for the configurational elements designated; and
a method updating signature in which the digital signature in the signed digital data is updated by substituting the feature values of the configurational elements before substitution for the portions corresponding to the configurational elements substituted by another data in the signature and by adding information specifying the substituted portions, and
wherein the verifier's apparatus includes:
a dividing method in verifier's apparatus in which the signed digital data to be verified is divided into a plurality of configurational elements by using an information in the digital signature;
a method to calculate feature value in verifier's apparatus in which the feature values other than the substituted configurational elements is calculated; and
a verifying method in which the feature values of the configurational elements substituted by the another data from the digital signature is extracted and in which the extracted feature values and the feature values of another configurational element calculated by the method to calculate feature value in the verifier's apparatus is combined as the signature object data, and in which the signed digital data is verified by the combined feature value and the digital signature value in the digital signature.

16. The system of claim 15,
wherein the digital data is compressed digital image data,
wherein a method to calculate the feature value in the signer's apparatus in which each of the configurational elements is decoded, after the compressed digital image data was divided into a plurality of configurational elements and before the feature values are calculated, into the intermediate data in which configurational element is independent of another, and the feature values by using the intermediate value is calculated,
wherein the sanitizing method in which each of the configurational elements is decoded into the intermediate data, after the division and before the substitution by another data, and in which the another data is substituted for the intermediate data to be sanitized, and
wherein a method to calculate the feature value in the verifier's apparatus in which each divided configurational elements is decoded into the intermediate data.

17. The system of claim 15 or 16, wherein the information used in the method to calculate the feature value in the signer's apparatus contains auxiliary data given in the procedure to calculate the feature values, and information which specifies the positions of each of the divided configurational elements.

18. A signer's apparatus which provides a digital signature to digital data in a system for verifying authenticity of sanitized digital data with the digital signature, comprising:
a method to calculate the feature value in which the digital data is divided into a plurality of configurational elements and in which the feature values of each of the divided configurational elements is calculated;
a method to create a signature value of the signature object data which is prepared by combining each of the calculated feature values; and
a method to create the signed digital data in which by the signature value and the information used in the method to calculate the feature value is jointed in order to create the digital signature for the digital data.

19. A sanitizer's apparatus which sanitizes signed digital data attached with a digital signature in a system for verifying authenticity of a sanitized digital data with the digital signature, comprising:
a sanitizing method in which the digital data in the signed digital data is divided into a plurality of configurational elements and in which another data is substituted for the designated configurational element; and
a method to update the signature,
wherein a digital signature attached to the signed digital data includes data which is necessary for calculating the feature values for each of the plurality of divided configurational element, and
wherein the method to update the signature in which the signature in the signed digital data is updated by substituting the feature value calculated from the configurational element before substitution, for the necessary data corresponding to the configurational element substituted by the another data in the digital signature, and by adding the information to specify the substituted portion, to the digital signature.

20. A verifier's apparatus which verifies authenticity of digital data in a system for verifying authenticity of a sanitized digital data attached with digital signature, comprising:
a method to divide a digital data with the digital signature to be verified in the verifier's apparatus into a plurality of configurational elements;
a method to calculate the feature value of each of the divided configurational elements; and
a verifying method for verifying a signature by using the given digital signature,
wherein the digital signature includes a signature value, necessary information for dividing the digital data, information to be used for calculating the feature values, and the feature values of the configurational elements, before sanitized, of the configurational elements, as corresponding to the sanitized portions, of each of the divided configurational elements, and
wherein the verifying method creates the signature object data to be verified by combining the feature values using the feature values of the configurational elements, before sanitized, in the digital signature as the feature values of the configurational elements, as corresponding to the sanitized portions, in the feature values of each of the configurational elements, and with using the feature values calculated by the feature value calculating means, as the feature value of another configurational element, thereby verifying the signature by using the signature values in the digital signature.
